# EUROPEAN PATENT APPLICATION

(11) **EP 4 368 373 A1**
(43) Date of publication of application: **15.05.2024**
(21) Application number: 23204574.0
(22) Date of filing: 19.10.2023
(51) Int. Cl.: B29C 64/165, B22F 10/14, B29C 64/35, B33Y 30/00, B33Y 40/00, G01N 21/3504

(54) **SYSTEMS FOR FLUID SUPPLY CONTAINMENT WITHIN ADDITIVE MANUFACTURING APPARATUSES**

(30) Priority: 11.11.2022 US 202263383398 P
(71) Applicant: General Electric Company, Schenectady, NY 12345 (US)
(72) Inventor: ARIAPAD, Alex W., Schenectady, 12345 (US); BROMBERG, Vadim, Schenectady, 12345 (US)
(74) Representative: Hafner & Kohl PartmbB

(57) **Abstract**

A fluid containment system (200) within an additive manufacturing system (100) comprises a body (202) having a set of panels and seals that define an interior cavity (214). One or more fluid supply sources are fluidly coupled to the interior cavity (214); the one or more fluid supply sources (210) provide at least one fluid to the cavity (214). A sensor (280) is positioned within the cavity (214), and the sensor (280) is configured to detect a vapor threshold within the interior cavity (214). The vapor is formed from an evaporated portion of the at least one fluid within the cavity (214). A controller (400) is communicatively coupled to the sensor (280), and the controller (400) is configured to provide control signals for directing fluid movement of the at least one fluid based on one or more signals received from the sensor (280).

## Description

### TECHNICAL BACKGROUND

The present specification generally relates to additive manufacturing apparatuses and, more specifically, to fluid containment within additive manufacturing apparatuses.

Additive manufacturing apparatuses may be utilized to "build" an object from build material, such as organic or inorganic powders, in a layer-wise manner. As iterations of additive manufacturing are engineered, finer and more reliable cleaning processes are necessary. Some binders and cleaners used in additive manufacturing are flammable or otherwise harmful to the apparatus if present outside a container. Since portions of the additive manufacturing apparatus may not be inert or not rated to contact fluid, there exists a possibility that vapor can flash off the liquid and create a flammable environment or otherwise corrode or damage the system

### BRIEF DESCRIPTION OF THE DRAWINGS

FIG. 1 schematically depicts a front view of an illustrative additive manufacturing apparatus according to one or more embodiments shown and described herein;
FIG. 2 schematically depicts a rear view of an illustrative additive manufacturing apparatus according to one or more embodiments shown and described herein;
FIG. 3 schematically depicts a front view of an illustrative fluid containment system within an additive manufacturing machine according to one or more embodiments shown and described herein.
FIG. 4 schematically depicts a rear view of an illustrative fluid containment system within an additive manufacturing machine according to one or more embodiments shown and described herein.
FIG. 5 schematically depicts a side view of an illustrative rear seal of the fluid containment system of FIGS. 3 and 4 according to one or more embodiments shown and described herein.
FIG. 6 depicts a flow diagram of an illustrative method for a controller of the fluid containment system within an additive manufacturing machine according to one or more embodiments shown and described herein.

Additional features and advantages of the fluid containment system within an additive manufacturing apparatuses described herein, will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### DETAILED DESCRIPTION

Reference will now be made in detail to embodiments of fluid containment within additive manufacturing apparatuses. Whenever possible, the same reference numerals will be used throughout the drawings to refer to the same or like parts.

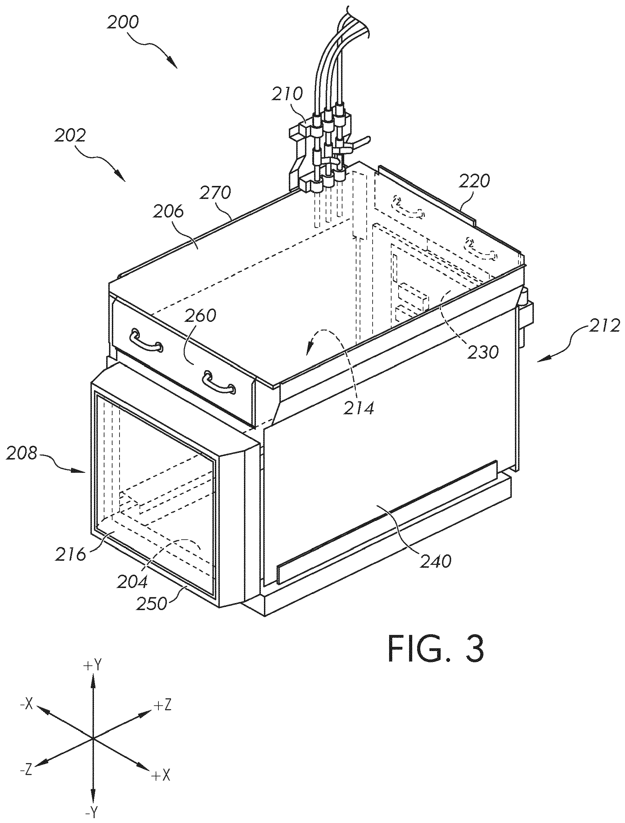

One embodiment of a fluid containment system is schematically depicted in FIG. 3. The fluid containment system may generally include a body 202 of a fluid containment system 200 having a set of panels and seals that define a cavity and one or more fluid supply sources fluidly coupled to the cavity. Various embodiments of fluid containment systems for additive manufacturing machines, additive manufacturing apparatus including the fluid containment systems, and methods for using the same are described in further detail herein with specific reference to the appended drawings. The use of panels and seals to contain fluid and prevent leak pathways prevents damage to equipment within the additive manufacturing system that may not be fire-resistant, inert, or corrosion-resistant. The use of panels and seals also prevents a potentially flammable environment from forming.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten percent margin.

During operation of an additive manufacturing apparatus, the efficacy and performance of the print head ensures optimum object formation. The print head is exposed to heat, and is also subject to excess build material distributed by a recoat head and/or binder material from the print head. The combination of these contaminants (e.g., excess build material and/or binder material) can lead to clogged nozzles in the print head, which can adversely impact operation of the additive manufacturing apparatus.

The embodiments described herein are directed to additive manufacturing apparatuses and components for additive manufacturing apparatuses, specifically fluid containment systems and methods for using the same, which may be used to monitor for leaks, contain leaks, and/or prevent or minimize the creation of a flammable environment.

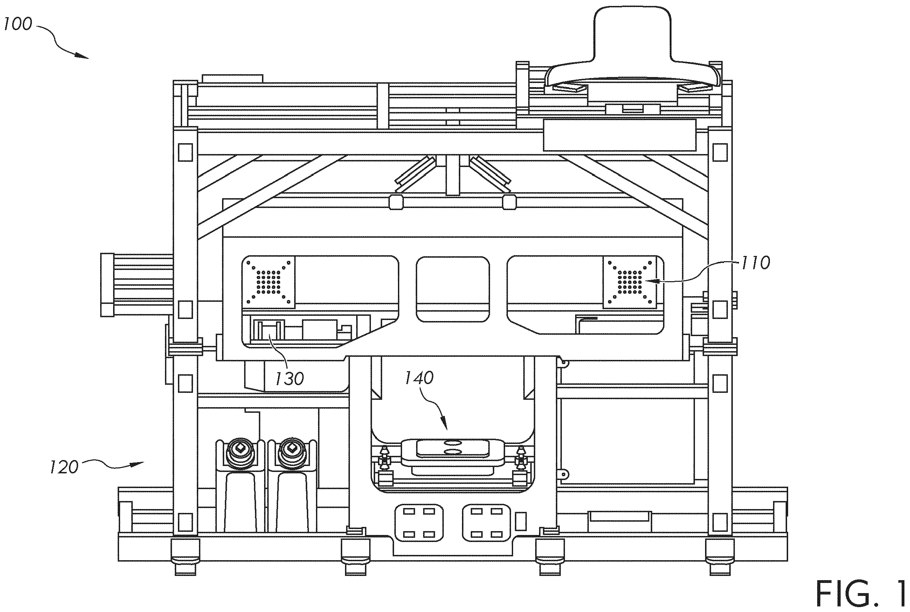

Referring now to FIG. 1, an embodiment of an additive manufacturing apparatus 100 is schematically depicted. The additive manufacturing apparatus 100 includes a cleaning station 130, a lift system 140, a process chamber 110, and a low voltage cabinet 120. The cleaning station 130 is fluidly coupled to a fluid supply (not shown). The fluid supply (not shown) is fluidly coupled to other systems within the additive manufacturing apparatus 100, such as the process chamber 110 in order to deliver binder to the work product. That is, the fluid supply (not shown) stores liquid that is provided to and from various systems of the additive manufacturing apparatus 100.

The additive manufacturing apparatus 100, including the cleaning station 130, may utilize non-aqueous binders and cleaners. Some non-aqueous binders and cleaners are flammable. With the use of flammable fluids, such fluids should be adequately contained. For example, if there is a leak with the non-aqueous binder or cleaner candidates, vapor may flash off the liquid. If there is enough liquid released at the leak, there could be enough vapor such that the environment within the machine becomes flammable. Accordingly, containment of the flammable liquid can avoid issues that may arise if the flammable fluid ignites.

Further, the fluid supply (not shown) has a plurality of leak paths (not shown) to the lift system 140 and the low voltage cabinet 120. Both the lift system 140 and the low voltage cabinet 120 include electrical components that are not rated to operate in a flammable environment. Thus, containment of fluid that could cause ignition may prevent damage to these areas of the additive manufacturing machine.

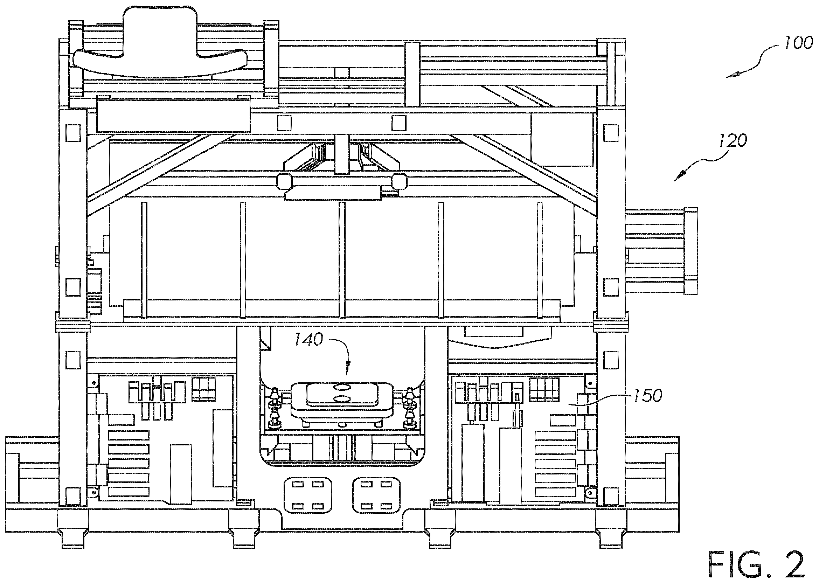

Referring now to FIG. 2, an embodiment of an additive manufacturing apparatus 100 is schematically depicted. The additive manufacturing apparatus 100 includes the lift system 140, the low voltage cabinet 120, and a pneumatics panel 150. The fluid supply (not shown) has a plurality of leak paths to the lift system 140, the low voltage cabinet 120, and the pneumatics panel 150. The lift system 140, the low voltage cabinet 120, and the pneumatics panel 150 include electrical components that are not rated to operate in a flammable environment. Thus, containment of fluid that could cause ignition may prevent damage to these areas of the additive manufacturing machine.

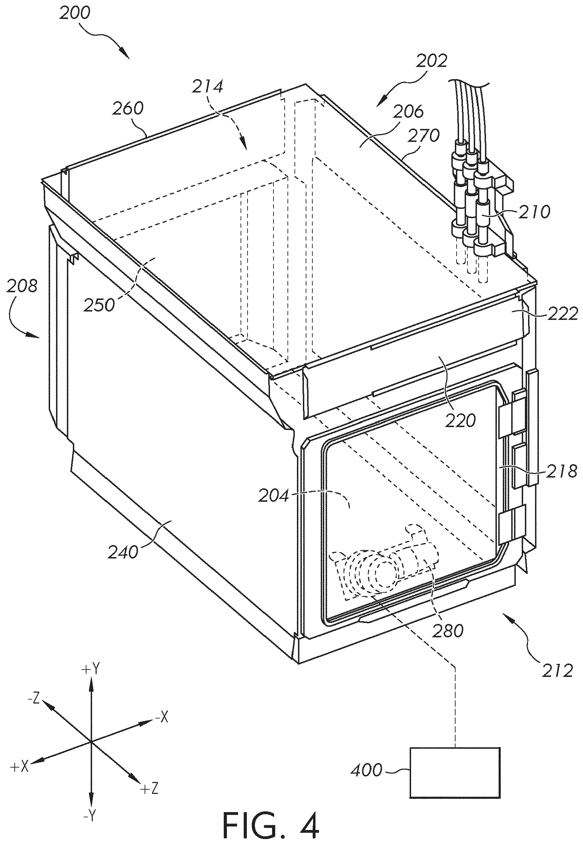

Referring now to FIGS. 3 and 4, an embodiment of a fluid containment system 200 is schematically depicted. A fluid supply 210 supplies cleaner and other fluids to various substations of the additive manufacturing apparatus, such as the cleaning station 130. The fluid supply 210 has a sealed connection to an interior 214 of the body 202, and thus, there is a potential for a leak of the fluid that the fluid within the fluid supply 210 could enter the body 202. The fluid containment system 200 generally includes a body 202 that includes a base 204, a ceiling 206, and one or more side panels (e.g., a first side panel 240 and/or a second side panel 270) extending between the base 204 and the ceiling 206. The base 204 of the body 202 may define a lowermost extent (e.g., in the -Y direction of the coordinate axes of FIGS. 3 and 4) of the fluid containment system 200. The ceiling 206 of the body 202 may define an uppermost extent (e.g., in the +Y direction of the coordinate axes of FIGS. 3 and 4) of the fluid containment system 200. In some embodiments, the base 204 and the ceiling 206 may each extend in a coplanar manner with respect to each other. That is, the base 204 and the ceiling 206 may each extend generally parallel to the plane defined by the X and Z axes of the coordinate axes depicted in FIGS. 3 and 4. In such embodiments, the side panels (e.g., the first side panel 240 and/or the second side panel 270) may generally extend orthogonal to the base 204 and the ceiling 206, such as, for example, substantially parallel to the plane defined by the Y and Z axes of the coordinate axes of FIGS. 3 and 4.

As depicted in the embodiment of FIG. 3, the body 202 of the fluid containment system 200 is arranged such that the base 204, the ceiling 206, the first side panel 240, and the second side panel 270 define a first end 208 and a second end 212. The first end 208 of the body 202 may generally provide an opening into an interior 214 of the body 202 defined by the base 204, the ceiling 206, the first side panel 240, and the second side panel 270. In some embodiments, as particularly depicted in FIG. 3, the first end 208 of the body 202 may be covered, such as via a first door 216 or other covering. In some embodiments, the first door 216 or other covering may provide access to the interior 214 of the body 202 of the fluid containment system 200 via the first end 208 thereof. Similarly, as particularly depicted in FIG. 4, the second end 212 of the body 202 may be covered, such as via a second door 218 or other covering. In some embodiments, the second door 218 or other covering may provide access to the interior of the body 202 of the fluid containment system 200 via the second end 212 thereof. In order to provide an effective containment of fluids within the interior 214 of the body 202 of the fluid containment system 200, one or more seals may be incorporated with one or more portions of the body 202, as described herein.

Still referring to FIGS. 3 and 4, the body 202 of the fluid containment system 200 may include a plurality of seals, such as, for example, a front door seal 250, a rear seal 230, a front upper panel seal 260, a rear upper panel seal 220. The front door seal 250 is positioned on an inside surface of the first door 216 or covering such that the interior 214 of the body 202 is fluidly sealed from an exterior environment In some embodiments, the front door seal 250 may include a single piece of material that covers the first end 208 of the body 202. In other embodiments, it is contemplated that the front door seal 250 may be a plurality of seals. In some embodiments, the front door seal 250 includes an ethylene propylene diene monomer (EPDM) hollow adhesive backed seal. EPDM is a copolymer of ethylene, propylene, and non-conjugated diene monomers. It is contemplated that other materials may be used for the front door seal 250 to provide a seal for the interior 214 of the body 202; thus, other embodiments are within the scope of this disclosure.

The body 202 may further include a rear seal 230, wherein the rear seal 230 is positioned on an inside surface of the pneumatics panel 150 or covering such that the interior 214 of the body 202 is fluidly sealed from an exterior environment. In some embodiments, the rear seal 230 may include a single piece of material that covers the second end 212 of the body 202. In other embodiments, it is contemplated that the rear seal 230 may be a plurality of seals. In some embodiments, the rear seal 230 include a single, rectangular piece of EPDM foam adhesive. It is contemplated that other materials may be used for the rear seal 230 to provide a seal for the interior 214 of the body 202; thus, other embodiments are within the scope of this disclosure.

The body 202 also includes a front upper panel seal 260, wherein the front upper panel seal 260 is positioned on the frame tubes (not shown) of the additive manufacturing apparatus 100 such that the interior 214 of the body 202 is fluidly sealed from an exterior environment. The front upper panel seal 260 may include an EPDM push-on-trim seal attached to the frame tubes (not shown) of the additive manufacturing apparatus. The front upper panel seal 260 may include a single, rectangular seal that covers the first end 208 of the interior 214 of the body 202 from the frame tube (not shown) to the ceiling 206. It is contemplated that other materials may be used for the front upper panel seal 260 to provide a seal for the interior 214 of the body 202; thus, other embodiments are within the scope of this disclosure. Additionally, it is contemplated that the front upper panel seal 260 may be a plurality of seals that attach to the frame tubes (not shown).

The body 202 also includes a rear upper panel seal 220, wherein the rear upper panel seal 220 is positioned on the frame tubes (not shown) of the additive manufacturing apparatus 100 such that the interior 214 of the body 202 is fluidly sealed from an exterior environment. The rear upper panel seal 220 may include an EPDM push-on-trim seal attached to the frame tubes (not shown) of the additive manufacturing apparatus. The rear upper panel seal 220 may include a single, rectangular seal that covers the second end 212 of the interior 214 of the body 202 from the frame tube (not shown) to the ceiling 206. It is contemplated that other materials may be used for the rear upper panel seal 220 to provide a seal for the interior 214 of the body 202; thus, other embodiments are within the scope of this disclosure. Additionally, it is contemplated that the rear upper panel seal 220 may be a plurality of seals that attach to the frame tubes (not shown).

Still referring to FIG. 3, the front door seal 250 is coupled to the first end 208 of the body 202. The front door seal 250 extends laterally across the plane defined by the X and Y axes of FIG. 3. The components of the body 202 are arranged in such a way that the front door seal 250 extends in one direction along the +X-axis toward the first side panel 240. The front door seal 250 extends in another direction along the -X-axis toward the second side panel 270. The front door seal 250 extends vertically in the -Y direction such that the front door seal 250 is below the front upper panel seal 260 and above the base 204.

The rear seal 230 is coupled to the second end 212 of the body 202. The rear seal 230 extends laterally across the plane defined by the X and Y axes of FIG. 3. The components of the body 202 are arranged in such a way that the rear seal 230 extends in one direction along the + X-axis toward the first side panel 240. The rear seal 230 extends in another direction along the - X -axis toward the second side panel 270. The rear seal 230 extends vertically in the + Y-direction such that the rear seal 230 below the rear upper panel seal 220 and above the base 204.

The front upper panel seal 260 is coupled to the first end 208 of the body 202. The front upper panel seal 260 extends laterally across the plane defined by the x-and y-axes of FIG. 3. The components of the body 202 are arranged in such a way that the front upper panel seal 260 extends in one direction along the + X-axis toward the first side panel 240. The front upper panel seal 260 extends in another direction along the - X-axis toward the second side panel 270. The front upper panel seal 260 extends vertically in the positive y-direction such that the front upper panel seal 260 is above the front door seal 250 and below the ceiling 206.

Referring now to FIG. 4, the fluid containment system 200 further includes a sensor 280 capable of detecting a lower explosive limit (LEL) of a vapor within the fluid containment system. The sensor 280 may be, for example, a Dräger Polytron^{®} 8700 IR sensor that uses an infrared sensor to measure gas concentration in the atmosphere. For example, the sensor 280 may be configured to detect the LEL of N-butanol, 2-ethoxyethanol, 2-methoxyethanol, or combinations thereof. However, other sensors configured to sense vapor as described herein are also contemplated and included within the scope of the present disclosure. In other embodiments, the sensor may be configured to measure various other parameters that may be indicative of a level of vapor (e.g., a humidity of the environment within the fluid containment system 200).

In some embodiments, the sensor 280 emits infrared radiation within the body 202. Any gas molecules that are present in the body 202 can absorb a portion of the emitted infrared radiation. The unabsorbed infrared radiation is then re-collected by the sensor 280. The sensor 280 then compares the amount of emitted infrared radiation to the amount detected upon recollection by the sensor 280. The sensor 280 correlates this absorption to a gas concentration, which can be sent to a controller 400.

The sensor 280 is communicatively coupled to the controller 400 such that when the sensor 280 outputs a signal, the controller 400 receives the signal and can direct other subsystems to start or stop an action. In some embodiments, the sensor 280 may output a signal between 4 and 20 mA, which the controller correlates to a lower explosive limit (LEL) between 0% and 100%.

Certain embodiments of the present disclosure may require a sensor capable of detecting N-butanol, 2-ethoxyethanol, 2-methoxyethanol, or combinations thereof. This list of gases is provided for illustrative purposes and is not exhaustive. N-butanol has a vapor density of 2.55 compared to air. 2-ethoxyethanol has a vapor density of 3.1 compared to air. 2-methoxyethanol has a vapor density of 2.62 compared to air. The placement of the sensor 280 is important with relation to these vapor densities. If lighter-than-air gases are used in the body 202, the sensor 280 may be positioned in or near the ceiling 206 of the body 202.

Certain gases to be detected may have a higher vapor density than that of air. Thus, if present, such gases may be detected by the sensor 280 near the bottom of the body 202 (e.g., the sensor 280 is positioned at or near the base 204 of the body 202). In other embodiments, the body 202 may include a plurality of sensors 280 in order to account for both lighter-than-air combustible fluids, heaver-than-air combustible fluids, fluids having a vapor density greater than that of air, and/or fluids having a vapor density less than that of air. For example, the body 202 may include one or more sensors 280 positioned at or near the ceiling of the body 202 and/or one or more sensors 280 positioned at or near the bottom of the body 202.

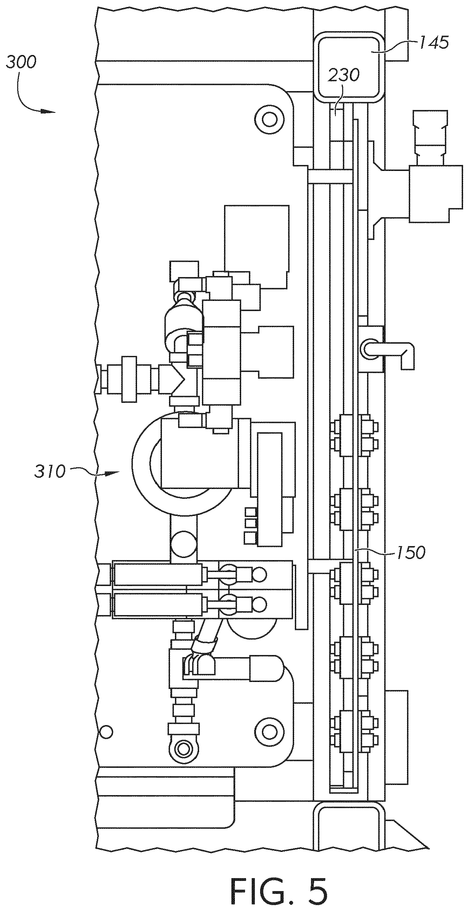

Referring now to FIG. 5, an embodiment of the rear portion of the body 300 is schematically depicted. For the purposes of brevity, the present application discusses the additive manufacturing apparatus 100 as a binder jet printer, but it should be understood that any other devices or systems may also be used. In FIG., 5, a pneumatic flow control system 310 is depicted as part of a binder jet printer is shown on one side of the rear seal 230.

Still referring to FIG. 5, the pneumatics panel 150 is shown. The rear seal 230 is disposed on the pneumatics panel 150. The rear seal 230 provides a seal between the pneumatics panel 150 and the pneumatic flow control system 310. A frame tube 145 is also depicted, and the rear seal 230 is coupled, at least partially, to the frame tube 145.

In embodiments, the pneumatic flow control system 310 may provide fluid movement and/or pressurization capabilities to various portions of the additive manufacturing apparatus 100 (FIG. 1). For example, the pneumatic flow control system 310 may control various components of the additive manufacturing apparatus 100 (FIG. 1) for the purposes of moving fluid and/or pressurizing fluid. In a particular embodiment, the pneumatic flow control system 310 may cause (e.g., transmit control signals or the like) to one or more valves, pumps, vacuum sources, or the like to cause fluid movement. As such, in embodiments where a pressure within the fluid containment system 200 (FIGS. 3-4) exceeds a threshold, the pneumatic flow control system 310 may automatically cause one or more components to evacuate fluid from the fluid containment system 200 to a vented location. Additional processes for operation of the fluid containment system 200 (FIGS. 3-4) are described hereinbelow.

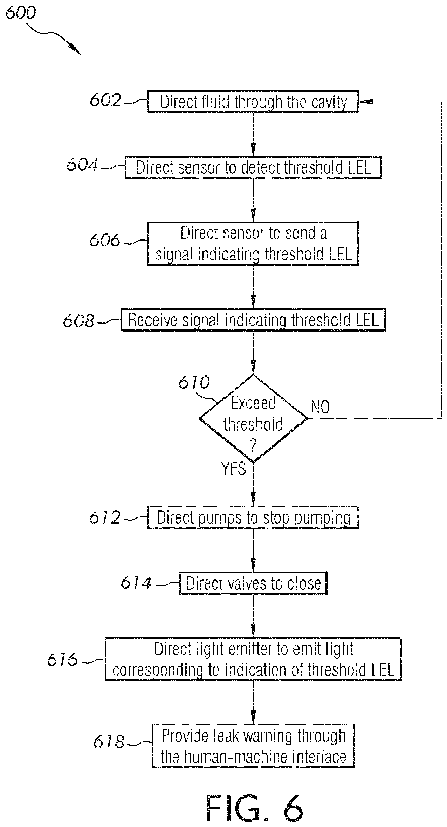

FIG. 6 is an illustrative method 600 for the controller 400 of the fluid containment system within an additive manufacturing machine. At block 602, the controller 400 may direct fluid through the cavity via the fluid supply 210. For example, upon commencement of the additive manufacturing process, the controller may move fluid along the plurality of pipes within the fluid supply 210 to the cleaning station 130.

At block 604, the controller 400, which may be communicatively coupled to the sensor 280, may direct the sensor 280 to detect a threshold LEL of a vapor based on the fluid moving through the cavity. For example, the controller may provide power to the sensor 280 such that the sensor is able to emit an infrared signal to measure the presence of any vapor in the cavity.

At block 606, the sensor 280 may send an electric signal to the controller 400 regarding a detected LEL. For example, the sensor 280 may send a signal of in mA units to the controller. At block 608, the controller 400 may receive the signal in mA and may correlate it to an LEL level between 0% and 100%. For example, the controller may receive a signal in mA that corresponds to 50% LEL of a particular vapor within the cavity.

At block 610, the controller 400 may determine whether the detected LEL is indicative of a threshold LEL. For example, if the LEL was above the threshold limit for ignition risk, the controller 400 will proceed accordingly to block 612. If the detected LEL is not indicative of a threshold LEL (e.g., the response to block 610 is "NO"), the process may return to block 602 to continue to direct and monitor fluid as previously described.

If the detected LEL is indicative of a threshold LEL (e.g., the response to block 610 is "YES"), at block 612 the controller 400 may direct one or more pumps to stop pumping. For example, the controller 400 may cut off the power supply of any pumps providing fluid throughout the additive manufacturing apparatus 100, thus stopping the pumps.

At block 614, the controller 400 that has detected a threshold LEL may direct one or more valves to close. For example, the controller 400 may cut off the power supply of any pumps providing fluid throughout the additive manufacturing apparatus 100, thus stopping the pumps.

At block 616, the controller 400 may also direct a light emitter to emit light corresponding to an indication of the threshold LEL. For example, the controller 400 may direct a light to flash yellow in recognition of a high LEL.

At an optional block 618, the controller 400 will provide the human-machine interface with a warning that a leak is present in the cavity. For example, the controller 400 might display a warning message that provides relevant information about the leak to a user.

As non-limiting examples, if the sensor 280 detects a LEL of 10% of a vapor and signals to the controller, the controller will display a warning in the human-machine-interface (HMI) that a leak is present in the system. If the sensor 280 detects a LEL of 20% of a vapor and signals to the controller, the controller will stop the pumps, close the valves, display a warning in the HMI that a leak is present in the system. The controller will further direct a light emitter to flash yellow as an additional caution to users.

If the sensor 280 detects a LEL of 25% of a vapor and signals to the controller, the controller will stop the pumps, close the valves, display a warning in the HMI that a leak is present in the system. The controller will further direct a light emitter to flash red as an additional caution to users.

Further aspects of the invention are provided by the subject matter of the following clauses:

A fluid containment system, comprising: a body having a set of panels and seals that define a cavity; one or more fluid supply sources fluidly coupled to the cavity, the one or more fluid supply sources providing at least one fluid to the cavity; a sensor positioned within the cavity, the sensor configured to detect a vapor threshold within the cavity, the vapor threshold formed from an evaporated portion of the at least one fluid within the cavity; and a controller communicatively coupled to the sensor, the controller configured to provide control signals for directing fluid movement of the at least one fluid based on one or more signals received from the sensor.

The fluid containment system of the preceding clause, further comprising: one or more pumps communicatively coupled to the controller, wherein the controller, upon receiving a signal from the sensor indicative of the vapor threshold, directs the one or more pumps to stop pumping fluid.

The fluid containment system of any preceding clause further comprising: one or more valves communicatively coupled to the controller, wherein the controller, upon receiving a signal from the sensor indicative of the vapor threshold, directs the one or more valves to close.

The fluid containment system of any preceding clause, further comprising: a light emitter, wherein the controller, upon receiving a signal from the sensor indicative of the vapor threshold, directs the light emitter to emit light corresponding to an indication of the vapor threshold.

The fluid containment system of any preceding clause, wherein the sensor is configured to detect volatile solvents.

The fluid containment system of any preceding clause, further comprising: a pneumatics panel; a front door seal, wherein the front door seal comprises an ethylene propylene diene monomer (EPDM) hollow adhesive backed seal affixed to the inside of a machine enclosure door; and a rear seal, wherein the rear seal comprises an EPDM foam adhesive backed seal affixed to the back side of a pneumatics panel.

The fluid containment system of any preceding clause, further comprising: one or more frame tubes; a rear upper panel seal, wherein the rear upper panel seal comprises an EPDM push-on-trim seal affixed to the one or more frame tubes; and a front upper panel seal, wherein the front upper panel seal comprises an EPDM push-on-trim seal affixed to the one or more frame tubes.

A system for additive manufacturing comprising: a cleaning station; a fluid containment system fluidly coupled to the cleaning station to supply cleaning fluid to the cleaning station, the fluid containment system comprising: a body having a set of panels and seals that define a cavity; one or more fluid supply sources fluidly coupled to the cavity, the one or more fluid supply sources providing at least one fluid to the cavity; a sensor positioned within the cavity, the sensor configured to detect a vapor threshold within the cavity, the vapor threshold formed from an evaporated portion of the at least one fluid within the cavity; and a controller communicatively coupled to the sensor, the controller configured to provide control signals for directing fluid movement of the at least one fluid based on one or more signals received from the sensor.

The additive manufacturing system of the preceding clause, further comprising: one or more pumps communicatively coupled to the controller, wherein the controller, upon receiving a signal from the sensor indicative of the vapor threshold, directs the one or more pumps to stop pumping fluid.

The additive manufacturing system of any preceding clause, further comprising: one or more valves communicatively coupled to the controller, wherein the controller, upon receiving a signal from the sensor indicative of the vapor threshold, directs the one or more valves to close.

The additive manufacturing system of any preceding clause, further comprising: a light emitter; wherein the controller, upon receiving a signal from the sensor indicative of the vapor threshold, directs the light emitter to emit light corresponding to an indication of the detected vapor threshold.

The additive manufacturing system of any preceding clause, wherein the sensor is configured to detect volatile solvents.

The additive manufacturing system of any preceding clause, further comprising: a pneumatics panel; a front door seal, wherein the front door seal comprises an ethylene propylene diene monomer (EPDM) hollow adhesive backed seal affixed to the inside of a machine enclosure door; and a rear seal, wherein the rear seal comprises an EPDM foam adhesive backed seal affixed to the back side of a pneumatics panel.

The additive manufacturing system of any preceding clause, further comprising: one or more frame tubes; a rear upper panel seal, wherein the rear upper panel seal comprises an EPDM push-on-trim seal affixed to the one or more frame tubes; and a front upper panel seal, wherein the front upper panel seal comprises an EPDM push-on-trim seal affixed to the one or more frame tubes.

The additive manufacturing system of any preceding clause, further comprising: a pneumatic flow control system configured to evacuate fluid from the fluid containment system to a vented location.

A method to monitor cleaning fluid in an additive manufacturing apparatus, the method comprising: causing, by a controller, at least one fluid to move through a body having a set of panels and seals that define a cavity via control signals to one or more pumps and/or one or more valves; receiving a signal from a sensor positioned within the cavity, the signal indicative of a vapor within the cavity, the vapor formed from the at least one fluid; determining that the vapor within the cavity exceeds a vapor threshold; causing the at least one fluid to cease moving via control signals to the one or more pumps and/or the one or more valves.

The method of the preceding clause, further comprising: directing, by the controller, the one or more pumps to stop pumping fluid upon receiving a signal from the sensor indicative of the vapor threshold.

The method of any preceding clause, further comprising: directing, by the controller, the one or more valves to close upon receiving a signal from the sensor indicative of the vapor threshold.

The method of any preceding clause, further comprising: directing, by the controller, a light emitter to emit light corresponding to an indication of the vapor threshold.

The method of any preceding clause, further comprising: directing, by the controller, a pneumatic flow control system to evacuate fluid from the cavity to a vented location.

## Claims

1. A fluid containment system (200), comprising:
a body (202) having a set of panels and seals that define an interior cavity (214);
one or more fluid supply sources (210) fluidly coupled to the interior cavity (214), the one or more fluid supply sources (210) providing at least one fluid to the interior cavity (214);
a sensor (280) positioned within the interior cavity (214), the sensor configured to detect a vapor threshold within the interior cavity (214), the vapor threshold formed from an evaporated portion of the at least one fluid within the interior cavity; and
a controller (400) communicatively coupled to the sensor (280), the controller (400) configured to provide control signals for directing fluid movement of the at least one fluid based on one or more signals received from the sensor.

2. The system of claim 1, further comprising:
one or more pumps communicatively coupled to the controller (400),
wherein the controller (400), upon receiving a signal from the sensor (280) indicative of the vapor threshold, directs the one or more pumps to stop pumping fluid.

3. The system of either of claims 1 or 2, further comprising:
one or more valves communicatively coupled to the controller (400),
wherein the controller (400), upon receiving a signal from the sensor (280) indicative of the vapor threshold, directs the one or more valves to close.

4. The system of any one of claims 1 to 3, wherein the controller (400), upon receiving a signal from the sensor (280) indicative of the vapor threshold, directs the light emitter to emit light corresponding to an indication of the vapor threshold.

5. The system of any one of claims 1 to 4, wherein the sensor (280) is configured to detect volatile solvents.

6. The system of any one of claims 1 to 5, further comprising:
a pneumatics panel (150);
a front door seal (250), wherein the front door seal (250) comprises an ethylene propylene diene monomer (EPDM) seal affixed to the inside of a machine enclosure door; and
a rear seal (230), wherein the rear seal (230) comprises an EPDM seal affixed to the back side of a pneumatics panel (150).

7. The system of any one of claims 1 to 6, further comprising:
one or more frame tubes (145);
a rear upper panel seal (220), wherein the rear upper panel (220) seal comprises an EPDM seal affixed to the one or more frame tubes (145); and
a front upper panel seal (260), wherein the front upper panel seal comprises an EPDM seal affixed to the one or more frame tubes.

8. A system for additive manufacturing (100) comprising:
a cleaning station (130); and
the fluid containment system (200) according to any one of claims 1 to 7.

9. The system of claim 8, further comprising:
a pneumatic flow control system (150) configured to evacuate fluid from the fluid containment system (200) to a vented location.

10. A method to monitor cleaning fluid in an additive manufacturing apparatus (100), the method comprising:
causing, by a controller (400), at least one fluid to move through a body (202) having a set of panels and seals that define an interior cavity (214) via control signals to one or more pumps and/or one or more valves;
receiving a signal from a sensor (280) positioned within the interior cavity (214), the signal indicative of a vapor within the interior cavity (214), the vapor formed from the at least one fluid;
determining that the vapor within the interior cavity exceeds a vapor threshold; and
causing the at least one fluid to cease moving via control signals to the one or more pumps and/or the one or more valves.

11. The method of claim 10, further comprising:
directing, by the controller (400), the one or more pumps to stop pumping fluid upon receiving a signal from the sensor (280) indicative of the vapor threshold.

12. The method of either claims 10 or 11, further comprising:
directing, by the controller (400), the one or more valves to close upon receiving a signal from the sensor (280) indicative of the vapor threshold.

13. The method of any one of claims 10 to 12, further comprising:
directing, by the controller (400), a light emitter to emit light corresponding to an indication of the vapor threshold.

14. The method of any one of claims 10 to 13, further comprising:
directing, by the controller (400), a pneumatic flow control system (150) to evacuate fluid from the interior cavity (214) to a vented location.
